# EUROPEAN PATENT SPECIFICATION

(11) **EP 0 645 297 B1**
(45) Date of publication and mention of the grant of the patent: **12.11.1997**
(21) Application number: 94200144.7
(22) Date of filing: 21.01.1994
(51) Int. Cl.: B62B 3/02, A47L 13/50

(54) **Foldable articulated dolly, suitable for the transport and loading of room cleaning and washing equipment**
Faltbarer gelenkiger Wagen geeignet zum Transport und Laden von Geräten zur Zimmerreinigung und -wäsche
Chariot articulé pliable, approprié pour le transport et le chargement d'équipement de nettoyage des chambres et de lavage

(30) Priority: 24.09.1993 IT PD930187
(43) Date of publication of application: 29.03.1995
(73) Proprietor: T.T.S. S.R.L. TECNO TROLLEY SYSTEM, 35013 Cittadella (Padova) (IT)
(72) Inventor: Zorzo, Roberto, I-35010 Onara di Tombolo, Padova (IT)
(74) Representative: Robba, Eugenio

(56) References cited:
- DE-U- 9 206 733
- US-A- 3 286 752
- US-A- 4 964 650

## Description

The present invention deals with a foldable articulated dolly, suitable for the transport and loading of room cleaning and washing equipment.

For years, cleaning equipment manufacturers have been marketing dollies with a metallic structure, whose type can be reduced to a parcel when not being used, composed of two frames, shaped as a reverse U, mutually crossed as an X, with a loading platform in the lower area. The frame ends are equipped with wheels. The two reverse-U frames are mutually hinged next to their crossing and the platform below is of the articulated type, according to known solutions, not only in this field of dollies, but also in other sectors. In fact, the platform is composed of two parts that are mutually hinged in an intermediate section and that are also hinged at their ends, next to their connection to the reverse U-frames.

The two parts of the platform, when the dolly is open, are coplanar and, when loaded, this coplanarity is ensured by two extensions belonging to one of them, that, after having passed the intermediate hinging axis, rest on the other part.

By lifting the platform next to the intermediate hinging, its two component parts are closed like a book, forcing the two supporting frames to close one against the other. Vice versa, when the two frames are one next to the other, by extending them to arrange them as an open X, the platform is restored, since its two component parts are opened again, reaching coplanarity. Such a dolly is used to transport rubbish bags, to transport linen-carrying bags, etc. The mouth edges of the bag containers are hanged to the upper cross members of the reverse U-frames, while the bag bottoms are supported by the platform below.

The upper cross members of the reverse U-frames are also useful as handrail to manoeuvre the dolly when moving it. So far, what has been described relates to long-existing dollies in all markets that are produced practically by all cleaning equipment manufacturers.

US-A-3.286.752 represents the most relevant prior art and discloses a dolly like the one included in the preamble of Claim 1. The dolly described in this document is not suitable to support overhanging pieces of equipment and cannot be used to transport and load room cleaning equipment.

The novelty of the present invention is provided by modifying the upper section of one of the two reverse U-frames, placing it in a vertical lying and integrating such section with members that are integral and coplanar with it, so that it is able to support pieces of equipment, not only suspended ones any more, but also overhanging ones and so that this modification and integration do not impair the dolly feature of being able to be reduced to a "parcel".

No hinging axes common to the two reverse-U frames are introduced, leaving the existing hinging members unaltered next to their crossing and the composition and functionality of the underlying loading platform, with the related articulations, remaining unaltered.

What has been previously stated is clarified by taking into account the enclosed drawings, in which:
Fig. 1 axonometrically shows a dolly in the open position;
Fig. 2 is a partially reduced side view of the dolly shown in Fig. 1;
Fig. 3 is the front view of the dolly, corresponding to the partially reduced view of Fig. 2;
Fig. 4 is the corresponding front view of the dolly in Fig. 1;
Fig. 5 is the corresponding side view of the dolly in Fig. 1;
Fig. 6 and Fig. 7 are the corresponding loaded views of the dolly in Fig. 4 and Fig. 5;
Fig. 8 shows the front view of a dolly in its open position;
Fig. 9 is a side view of Fig. 8;
Fig. 10̸ and Fig. 11 are representations corresponding to Fig. 8 and Fig. 9;
Fig. 12 and Fig. 13 show an embodiment corresponding to Fig. 8 and Fig. 9;
Fig. 14 and Fig. 15 show an embodiment corresponding to Fig. 10̸ and Fig. 11;
Fig. 16 and Fig. 17 show an embodiment corresponding to Fig. 8 and Fig. 9;
Fig. 18 and Fig. 19 show an embodiment corresponding to Fig. 16 and Fig. 17;
Fig. 20̸ and Fig. 21 show an embodiment corresponding to Fig. 16 and Fig. 17;
Fig. 22 and Fig. 23 show an embodiment corresponding to Fig. 12 and Fig. 13;
Fig. 24 and Fig. 25 show an embodiment corresponding to Fig. 22 and Fig. 23;
Fig. 26 and Fig. 27 again show an embodiment corresponding to Fig. 22 and Fig. 23;
Fig. 28 and Fig. 29 show the improved dollies; and
Fig. 30̸ shows, as an example, a dolly according to the invention.

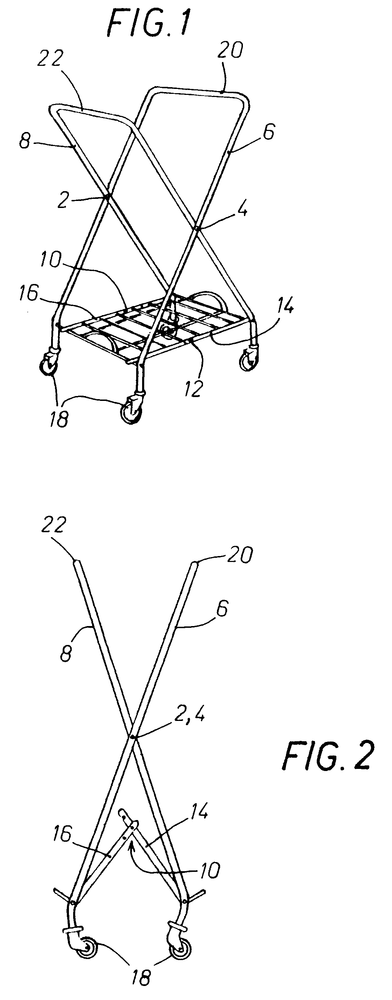

Fig. 1 axonometrically shows a dolly in the open position, with reverse U-frames, crossed as an X and mutually hinged next to their crossing, with an underlying articulated platform. The two reverse U-frames, hinged in 2 and 4, are referred to as 6 and 8, next to their crossing. The two currently coplanar parts, mutually hinged next to 10̸ and 12, are referred to as 14 and 16, and they compose the loading platform. The wheels applied to the ends of the two reverse U-frames 6 and 8 are referred to as 18.

Fig. 2 is a partially reduced side view of the dolly shown in Fig. 1. The two frames 6 and 8 can be seen one partially near the other, with respect to the open position, having rotated around the hinges 2, 4 and the two parts 14 and 16 composing the loading platform mutually hinged in 10̸ and 12, lifted at the center, not being in coplanar positions any more. The hinges of the frames 6 and 8 are referred to as 2 and 4 and the hinges connecting the two parts 14 and 16 of the loading platform are referred to as 10̸ and 12. The wheels are referred to as 18 and the upper parts of the two frames 6 and 8 are referred to as 20̸ and 22.

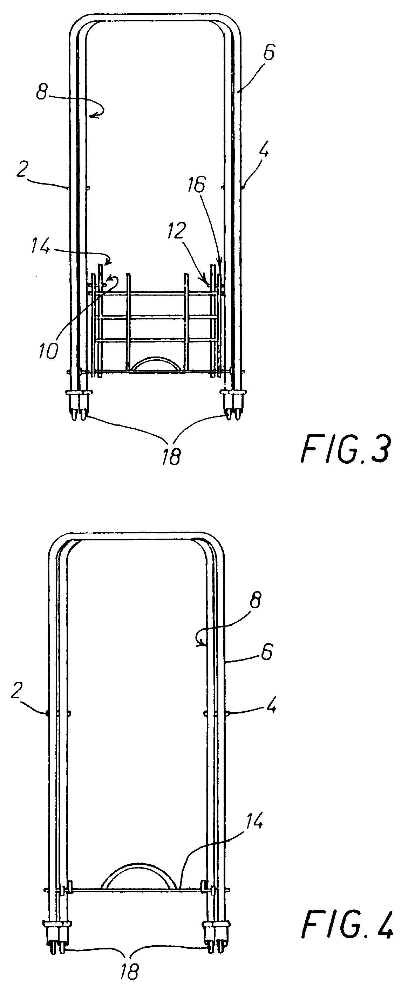

Fig. 3 is the front view of the dolly, corresponding to the partially reduced view of Fig. 2.

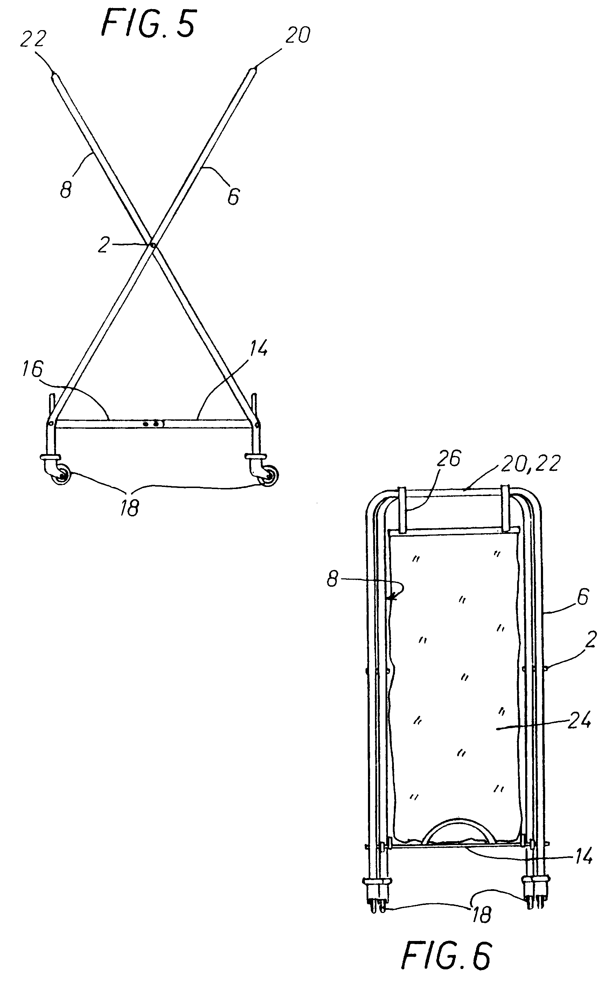

The reference symbols for the parts in Fig. 3 and all the following figures are the same as those used in Fig. 2. Fig. 4 is the corresponding front view of the dolly in Fig. 1, while Fig. 5 is the corresponding side view of the dolly in Fig. 1.

The dolly, which is in the open position, is free of every equipment and load.

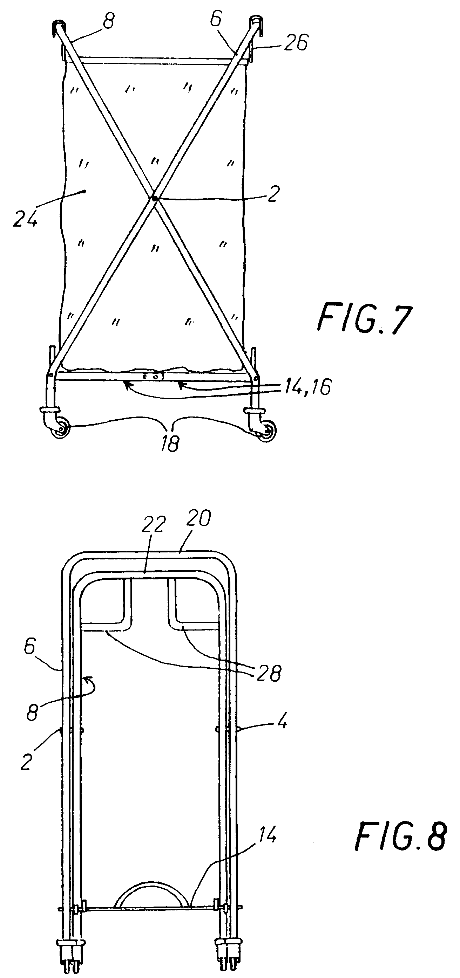

Fig. 6 and Fig. 7 are the corresponding views of the dolly in Fig. 4 and Fig. 5, now loaded with a linen-carrying bag 24. Such bag 24 is supported on its lower side by the loading platform 14, 16, and is hanged on its upper side through hook braces 26 to the upper parts 20̸ and 22 of the frames 6 and 8. The Fig. 1, 2, 3, 4, 5, 6, and 7 described so far are related to dollies already existing on the market for years and that are therefore well known.

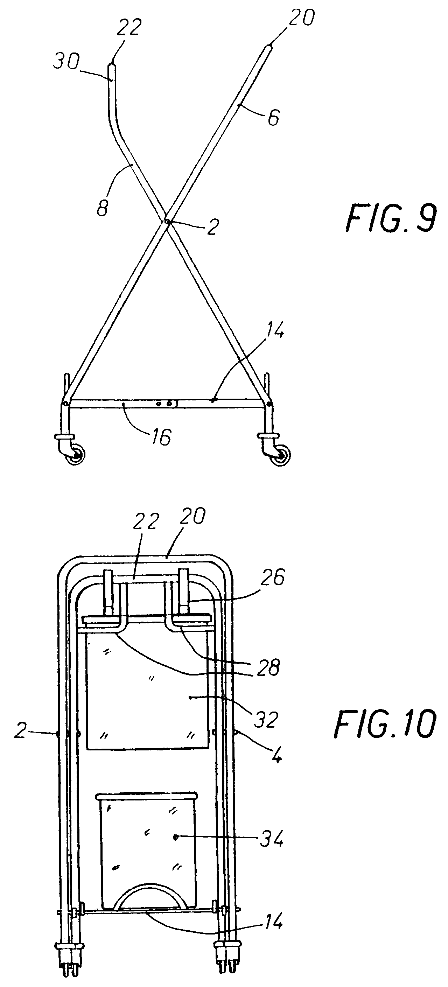

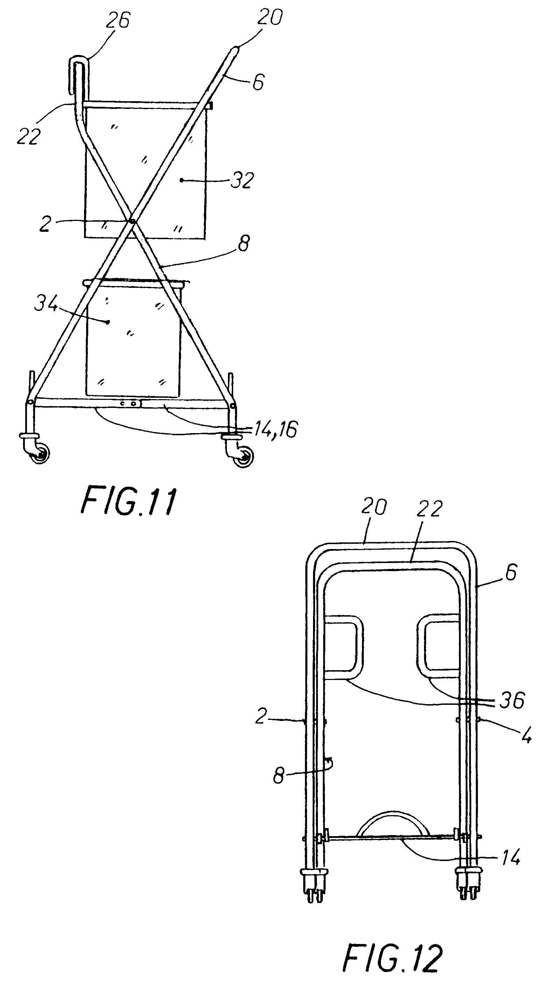

Fig. 8 shows the front view of a dolly in its open position, composed of two frames 6 and 8 substantially configured as a reverse U, arranged as an X, hinged in 2 and 4 next to their crossing and of an underlying articulated platform, whose component parts 14 and 16 are mutually internally hinged and (are hinged) to the ends of the frames themselves. As shown by the Figures, the frame 8 is equipped with two members 28 that connect its sides to the upper part 22. Fig. 9 is a side view of Fig. 8. Frame 8 that, as said above, is in its open position, shows, on its upper part, a vertically-lying section 30̸. The added members 28 (that can be seen in Fig. 8) are applied to this section 30̸; they are also vertically placed and therefore are coplanar with the above-said section 30̸. Frame 8, improved by vertically shaping its upper section and by applying members 28, is now able to support overhanging equipment. Fig. 10̸ and Fig. 11 are the corresponding representations of Fig. 8 and Fig. 9, where the frame 8 overhangingly supports a generic piece of equipment 32 (shown diagramatically) and the platform 14, 16, going on performing its loading platform function, supports a generic load 34 (shown diagramatically).

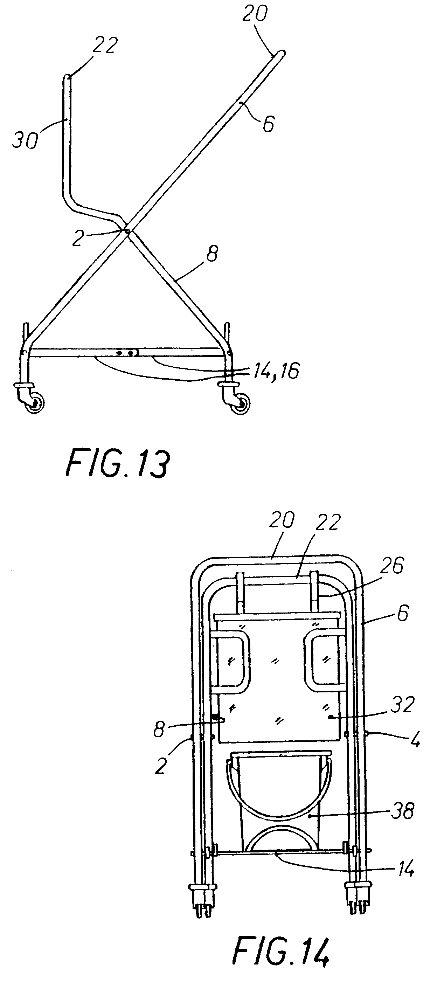

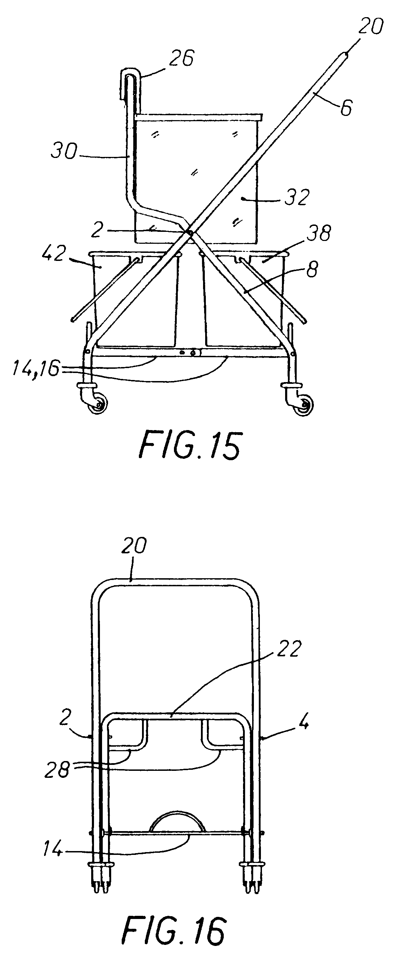

Fig. 12 and Fig. 13 show an embodiment corresponding to Fig. 8 and Fig. 9, with the difference that each of the additional members 36 to the frame 8 does not connect the side any more to the upper part of the frame, but connects two points of the same side. Obviously, the additional members 36 have the same vertical lying as the upper section 30̸ of the frame 8. Fig. 14 and Fig. 15 show an embodiment corresponding to Fig. 10̸ and Fig. 11, where the frame 8 overhangingly supports a generic piece of equipment 32 (shown diagramatically) and the platform 14, 16, going on performing its loading platform function, supports a generic load 38 (shown diagramatically).

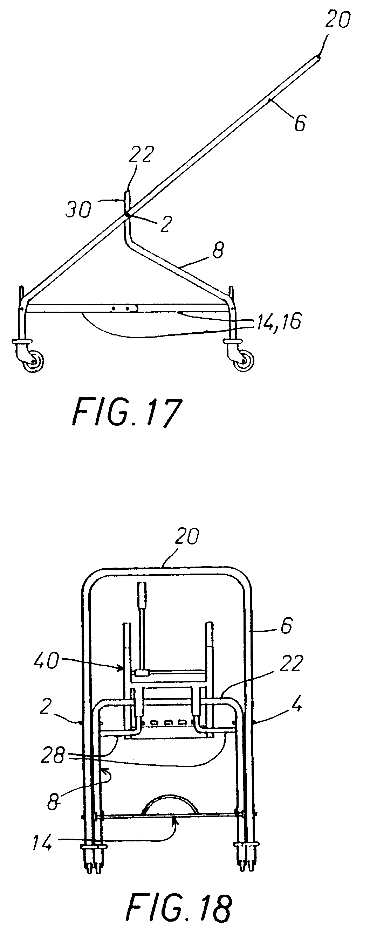

Fig. 16 and Fig. 17 show an embodiment corresponding to Fig. 8 and Fig. 9. Frame 8, that has been further reduced as extent, so that its upper part 22 approaches the loading platform 14, 16, shows, like before, a vertically-lying section 30̸ on its upper side. The additional members 28 are applied to this section, and they are also vertically lying and therefore coplanar with the above-said section 30̸. Frame 8, improved by vertically shaping its upper section and by applying members 28, is able, as previously seen, to support overhanging equipment.

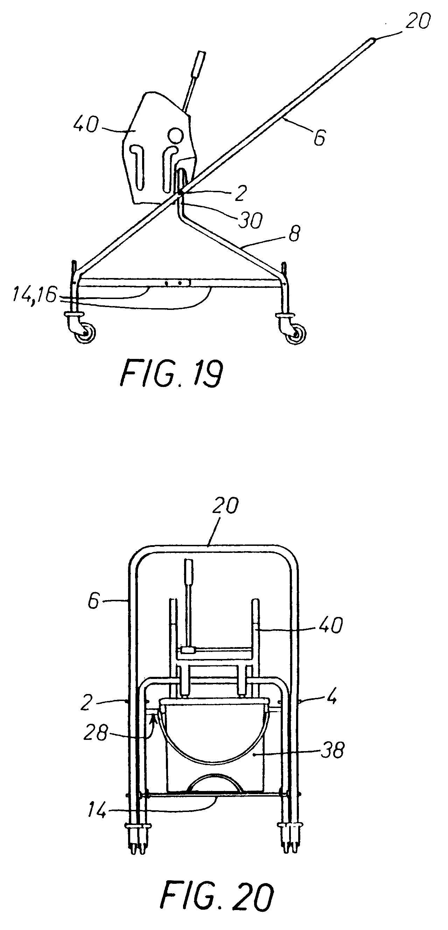

Fig. 18 and Fig. 19 show an embodiment corresponding to Fig. 16 and Fig. 17, where the equipment that the frame 8 is able to overhangingly support, is represented by a wringer 40̸ (shown diagramatically). In these figures, there are no loads applied to the platform 14, 16.

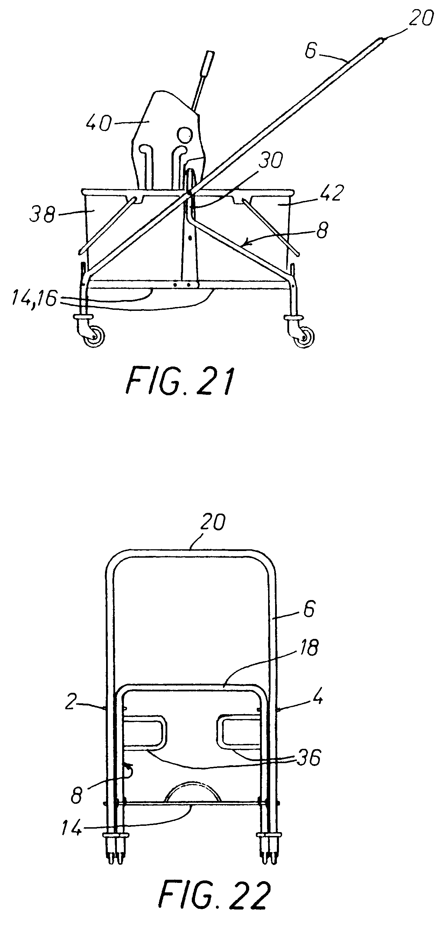

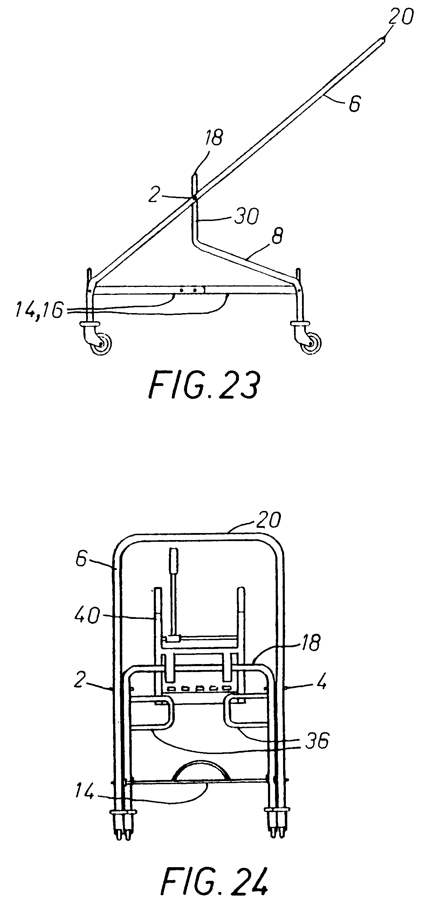

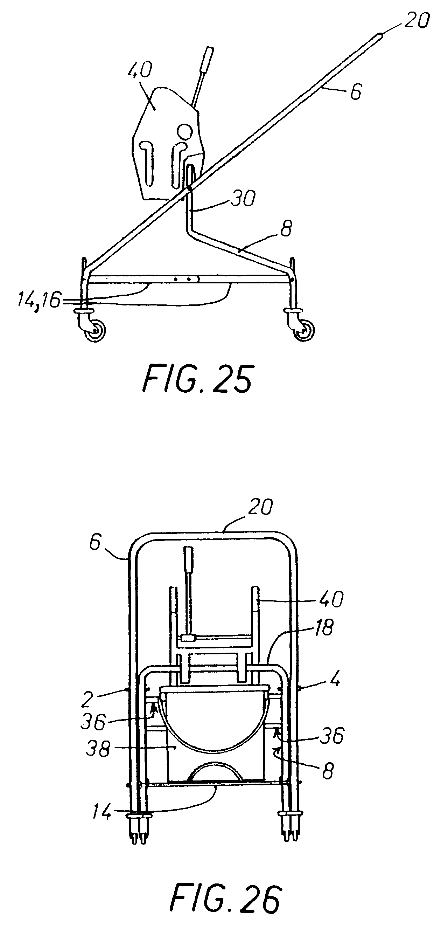

Fig. 20̸ and Fig. 21 again show an embodiment corresponding to Fig. 16 and Fig. 17. In these Figures, in addition to overhangingly loading the wringer 40̸ on the vertically-lying section of the frame 8, two buckets 38 and 42 are loaded onto the platform 14, 16. It must be observed here that the buckets 38 and 42 must be positioned before the wringer 40̸ since the lower part of the wringer prevents its being positioned afterwards. It must further be observed that, in order to prevent the bucket edges from hindering the correct positioning of the wringer, the members 28 can be locally deformed. Fig. 22 and Fig. 23 show an embodiment corresponding to Fig. 12 and Fig. 13. Frame 8, that has been further reduced as extent, so that its upper part 22 approaches the loading platform 14, 16, shows, like before, a vertically-lying section 30̸ on its upper side. The additional members 36 are applied to this section, and they are also vertically lying and therefore coplanar with the above-said section 30̸. Frame 8, improved by vertically shaping its upper section and by applying members 36, is able, as previously seen, to support overhanging equipment. Fig. 24 and Fig. 25 show an embodiment corresponding to Fig. 22 and Fig. 23, where the equipment that the frame 8 is able to overhangingly support, is represented by a wringer 40̸.

In these Figures, there are no loads applied to the platform 14, 16.

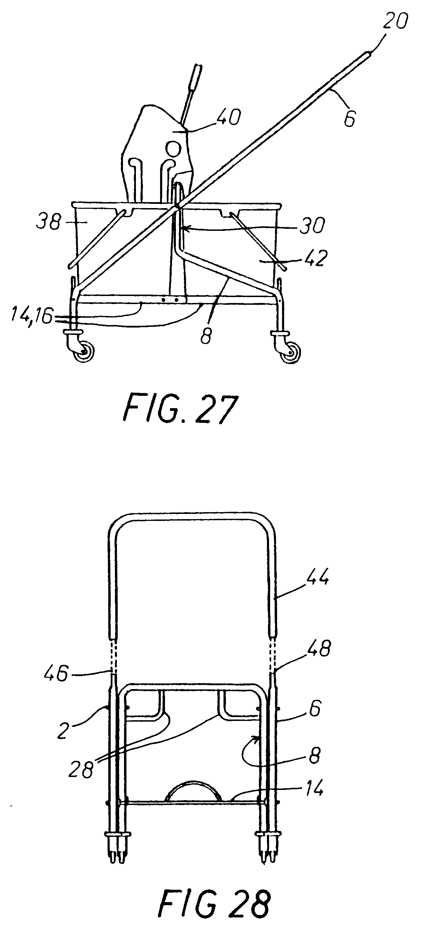

Fig. 26 and Fig. 27 again show an embodiment corresponding to Fig. 22 and Fig. 23. In these Figures, in addition to overhangingly loading the wringer 40̸ on the vertically-lying section of the frame 8, two buckets 38 and 42 are loaded onto the platform 14, 16. It must be observed here that the buckets 38 and 42 must be positioned before the wringer 40̸ since the lower part of the wringer prevents its being positioned afterwards.

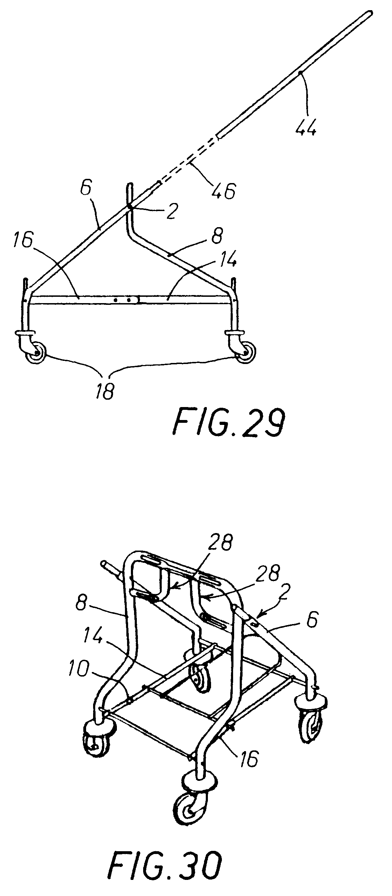

Fig. 28 and Fig. 29 show that the improved dollies, described so far, in addition to being able to be reduced as dimensions, thanks to their articulation deriving from mutually hinging the frames 6 and 8 and from the various hingings of the two parts composing the loading platform, one to the other and with respect to frames 6 and 8, to which they are connected, can be further reduced, because the upper part 44 of the frame 6 can be separated from the lower part, being the respective sides of the two parts able to be mutually and telescopically coupled in 46 and 48.

Fig. 30̸ shows, as an example, a dolly according to the invention, where the vertical lying of the upper part of the frame 8, instead of being in a central position with respect to the loading platform, is displaced on one side.

After what has been previously described and shown, it is apparent that the invention consists in the improvement of one of the two reverse-U frames, crossed as an X, pertaining to dollies that can be reduced, used to transport room cleaning equipment, and precisely in having shaped the upper part of such frame, imparting a vertical lying to it and integrating it with additional members, so that the above-said frame is able to support overhanging equipment. The amount of the upper part of the frame that is shaped with a vertical lying is not binding for the invention; the following are not binding as well: connection shape, way and position, and number of additional members with which the upper vertically-lying part of the frame is integrated.

The position of the vertically-lying platform of the upper part of the interested frame is again not binding for the invention, with respect to the underlying loading platform, or with respect to the support plan composed of the wheels applied to the lower ends of the two reverse U-frames.

## Claims

1. Foldable articulated dolly, suitable to transport and load room cleaning equipment, comprising:
- two reverse U-frames (6, 8) mutually hinged next to hinges (2, 4) located at an intermediate crossing along legs of said frames (6, 8)
characterized in that it further comprises
- a platform composed of two parts (14, 16) mutually hinged in an intermediate position (10̸), each one of said two parts (14, 16) being in turn hinged next to end areas of the legs of said reverse-U frames (6, 8),
one (8) of the two reverse U-frames (6, 8) crossed as an X and mutually hinged next to their crossing (2, 4) having a section (30̸) of its upper part (22) that is lying on a vertical plane when the dolly is in its open position.

2. Foldable articulated dolly according to claim 1, characterized in that the section (30̸) lying on a vertical plane belonging to the upper part of one (8) of the two reverse U-frames (6, 8) of the dolly is internally integrated with additional members (28, 36) that are integral and coplanar with it so that they make it suitable to support overhanging equipment (32), including wringers (40̸), and arranged so that said additional members (28, 36) cannot affect the other frame (6) in any way.

3. Foldable articulated dolly according to claim 1, characterized in that the vertical plane in which the section (30̸) of the upper part (22) of the reverse U-frame (8) lies, with respect to the underlying loading platform (14, 16) of the dolly or with respect to a support plan composed of wheels (18) applied to lower ends of the two frames (6, 8), can pass through a center line of the loading platform (14, 16) or be displaced from said center line.

4. Foldable articulated dolly according to any one of the previous claims, characterized in that an alignment axis of said hinges (2, 4) of the two reverse U-frames (6, 8) is in the vertical plane in which the section (30̸) of the upper part (22) of the reverse U-frame (8) lies.

## Patentansprüche

1. Faltbarer gegliederter Transportwagen, geeignet zum Transport und zum Laden von Raumreinigungseinrichtungen, mit
- zwei Umkehr-U-Rahmen (6, 8), die wechselseitig an Gelenken (2, 4) angelenkt sind, die an einander kreuzenden Zwischenabschnitten längs den Beinen der Rahmen (6, 8) angeordnet sind,
dadurch gekennzeichnet, daß er ferner umfaßt
- eine Plattform, die aus zwei Teilen (14, 16) zusammengesetzt ist, die wechselseitiing an einer Zwischenposition (10) angelenkt sind, von denen jedes der beiden Teile (14, 16) wiederum nahe Endbereichen der Beine der Umkehr-U-Rahmen (6, 8) angelenkt sind,
- wobei einer (8) der beiden Umkehr-U-Rahmen (6, 8), die wie ein X gekreuzt und wechselseitig nahe ihren Kreuzungen (2, 4) angelenkt sind, einen Abschnitt (30) seines oberen Teils (22) hat, der in einer vertikalen Ebene liegt, wenn der Transportwagen in seiner geöffneten Position ist.

2. Faltbarer gegliederter Transportwagen nach Anspruch 1, dadurch gekennzeichnet, daß der Abschnitt (30), der in einer vertikalen Ebene liegt, die zu dem oberen Teil von einem (8) der beiden Umkehr-U-Rahmen (6, 8) des Transportwagens gehört, intern mit zusätzlichen Gliedern (28, 30) integriert ist, die einstückig und koplanar mit ihm so sind, daß sie ihn zur Unterstützung überhängender Einrichtung (32), einschließlich Wringern (40), geeignet machen, und so angeordnet, daß die zusätzlichen Glieder (28, 36) den anderen Rahmen (6) in keiner Wese beeinflussen können.

3. Faltbarer gegliederter Transportwagen nach Anspruch 1, dadurch gekennzeichnet, daß die vertikale Ebene, in der der Abschnitt (30) des oberen Teils (22) des Umkehr-U-Rahmens (8) liegt, in Bezug auf die darunter liegende Ladeplattform (14, 16) des Transportwagens oder in Bezug auf eine Stützebene*, die aus Rädern (18) zusammengesetzt ist, die an den unteren Enden der beiden Rahmen (6, 8) angebracht sind, durch die Mittellinie der Ladeplattform (14, 16) hindurchgehen oder gegenüber der Mittellinie versetzt sein kann.

4. Faltbarer gegliederter Transportwagen nach einem der vorhergehenden Ansprüche, dadurch gekennzeichnet, daß die Ausrichtungsachse der Gelenke (2, 4) der beiden Umkehr-U-Rahmen (6, 8) in der vertikalen Ebene liegt, in der der Abschnitt (30) des oberen Teils (22) des Umkehr-U-Rahmens (8) liegt.

## Revendications

1. Chariot articulé pliable, approprié pour transporter et charger un équipement de nettoyage de chambre, comprenant :
- deux structures en forme de U inversé (6,8) articulées l'une par rapport à l'autre au voisinage des articulations (2,4), situées au niveau d'un croisement intermédiaire le long des branches desdites structures (6,8) , caractérisé en ce qu'il comprend de plus :
- une plateforme composée de deux parties (14, 16) articulées l'une par rapport à l'autre dans une position médiane (10), chacune des deux dites parties (14, 16) étant à son tour articulée à proximité des zones d'extrémité des branches desdites structures en forme de U inversé (6,8),
l'une (8) des deux structure en forme de U inversé (6,8) se croisant comme un X et articulées l'une par rapport à l'autre , au voisinage de leur point de croisement (2, 4) présentant une section (30) de sa partie supérieure (22) qui s'étend dans un plan vertical lorsque le chariot se trouve dans sa position ouverte .

2. Chariot articulé pliable selon la revendication 1, caractérisé en ce que la section (30) reposant dans un plan vertical appartenant à la partie supérieure de l'une (8) des deux structures en forme de U inversé (6,8) du chariot est intégrée en interne aux éléments supplémentaires (28, 36) qui sont lui solidaires et coplanaires , de sorte qu'ils la rendent appropriée pour supporter un équipement (32) en suspension, incluant des essoreuses (40), et disposée de telle sorte que lesdits éléments supplémentaires (28, 36) ne peuvent en aucune manière affecter l'autre structure (6).

3. Chariot articulé pliable selon la revendication 1, caractérisé en ce que le plan vertical dans lequel la section (30) de la partie supérieure (22) de la structure en U inversé (8) repose , par rapport à la plateforme de chargement sous-jacente (14, 16) du chariot ou par rapport à un plan support composé de roues (18) appliquées aux extrémités inférieures des deux structures (6,8) , peut passer par une ligne centrale de la plateforme de chargement (14, 16) ou être déplacé de ladite ligne centrale.

4. Chariot pliable articulé selon l'une quelconque des revendications précédentes , caractérisé en ce qu'un axe d'alignement desdites articulations (2,4) des deux structures en forme de U inversé (6,8) se trouve dans le plan vertical dans lequel s'étend la section (30) de la partie supérieure (22) de la structure en forme de U inversé (8) .
